# EUROPEAN PATENT APPLICATION

(11) **EP 1 206 955 A2**
(43) Date of publication of application: **22.05.2002**
(21) Application number: 01302984.8
(22) Date of filing: 29.03.2001
(51) Int. Cl.: A63F 13/12

(54) **Information terminal, information providing server, online game method and recording medium**

(30) Priority: 17.11.2000 JP 2000351908
(71) Applicant: Square Co., Ltd., Tokyo 153-8688 (JP)
(72) Inventor: Matsuno, Yasumi, c/o Square Co., Ltd., Tokyo 153-8688 (JP); Maehiro, Kazutoyo, c/o Square Co., Ltd., Tokyo 153-8688 (JP)
(74) Representative: Musker, David Charles

(57) **Abstract**

An online game method provides an online game using game related parameters. When a game machine 103a utilizes an information service provided by a server group 102, it monitors the utilization condition of the information service, and transmits the monitored result to the profile server 115. The profile server 115 updates the game related parameters in response to the monitored result, and the game server 116 that provides the online game provides the online game using the game related parameters.

## Description

The present invention relates to a (video) game machine that is connectable to an information service system such as a server via a communications network, and preferably applicable to receiving various information services from the server, and also relates to a server, online game method and recording medium.

As a communications network such as the Internet becomes popular, online games are appearing which have a video game machine connected to a server connected to the Internet to carry out games using game related information provided by the server.

The conventional online games, however, are isolated from the other information services such as chatting and E-mail.

Therefore, an object of the present invention is to provide an information terminal, an information providing server, an online game method and a recording medium utilizing characteristics of the information terminal with a function of communications for an online game.

According to the invention, there is provided an information terminal that enables a game, and is connected to an information providing server providing information services, to receive the information services including an online game, in which the information terminal includes a monitor that monitors utilization conditions of the information services and transmits results of the monitoring to the information providing server, the information providing server updates parameters used by the online game in response to the results of the monitoring.

According to the present invention, the monitor monitors an information service other than the online game.

The monitor may also monitor the utilization condition of mail among the information services.

According to the present invention, parameters include parameters of a game character operated by a user through the information terminal.

According to the present invention, there may be provided an information terminal that enables a game, and is connected to an information providing server providing information services, to receive the information services including an online game. The information providing server includes a monitor that monitors utilization conditions of the information services; and a system that updates parameters used by the online game in response to the results of the monitoring.

According to the present invention, there may be provided an information terminal that enables a game, and is connected to an information providing server providing information services, to receive the information services, the information terminal including a monitor that monitors utilization conditions of the information services; and a system that updates parameters used by an online game in response to the results of the monitoring.

According to the present invention, there may be provided an information providing server that provides an information terminal with information services including an online game. The information providing server includes a receiver that receives utilization conditions of information services other than the online game, which are utilized by the information terminal. The server also includes a system that updates parameters used by the online game in response to the utilization conditions. Consequently, the information providing server provides the online game with the parameters.

According to the present invention, there may be provided an information providing server that provides a client with information services including an online game, the information providing server including a monitor that monitors utilization conditions of information services other than an online game from an information terminal side; the server also includes a system that updates parameters used by the online game in response to the utilization conditions of the information services. Consequently, the information providing server provides the online game with the parameters.

According to another aspect of the present invention, there may be provided an online game method that connects an information terminal capable of playing a game to an information providing server providing information services including an online game, so that the information terminal can receive the information services. The online game includes monitoring utilization conditions of the information services by using the information terminal or the information providing server; and updating parameters used by the online game in response to results of the monitoring by using the information providing server.

According to the present invention, there may be provided a recording medium recording a program to be executed by an information terminal that enables a game, and is connected to an information providing server providing information services, to receive the information services including an online game. The program monitors utilization conditions of the information services; and transmitting results of the monitoring to the information providing server. Thus, the information providing server updates parameters used by the online game in response to the results of the monitoring.

According to an aspect of the present invention, the monitoring monitors an information service other than the online game. According to the present invention, the monitoring monitors the utilization condition of mail among the information services.

According to the present invention, there may be provided a recording medium storing such a program. The parameters include parameters of a game character operated by a user through the information terminal.

According to the present invention, there may be provided a program to be executed by an information terminal that enables a game, and is connected to an information providing server providing information services, to receive the information services. The program monitors utilization conditions of the information services; and transmits results of the monitoring to the information providing server. Thus, the information providing server updates parameters used by the online game in response to the results of the monitoring.

According to the present invention, entirely new online games can be provided which are associated with various information services provided by an information service system. Thus, it increases not only the utilization frequency of the online games, but also that of the information services associated with the online games.

The above and other objects, features and advantages of the present invention will become more apparent from the following description of embodiments thereof taken in conjunction with the accompanying drawings.
Fig. 1 is a block diagram showing a configuration of an embodiment of a system in accordance with an aspect of the present invention;
Fig. 2 is a diagram illustrating the content of the information processing of the embodiment in accordance with an aspect of the present invention;
Fig. 3 is a flowchart illustrating the content of the information processing on a server side according to an aspect of the present invention; and
Fig. 4 is a flowchart illustrating the content of the information processing on a client side according to an aspect of the present invention.

An embodiment of the present invention will now be described in detail with reference to accompanying drawings.

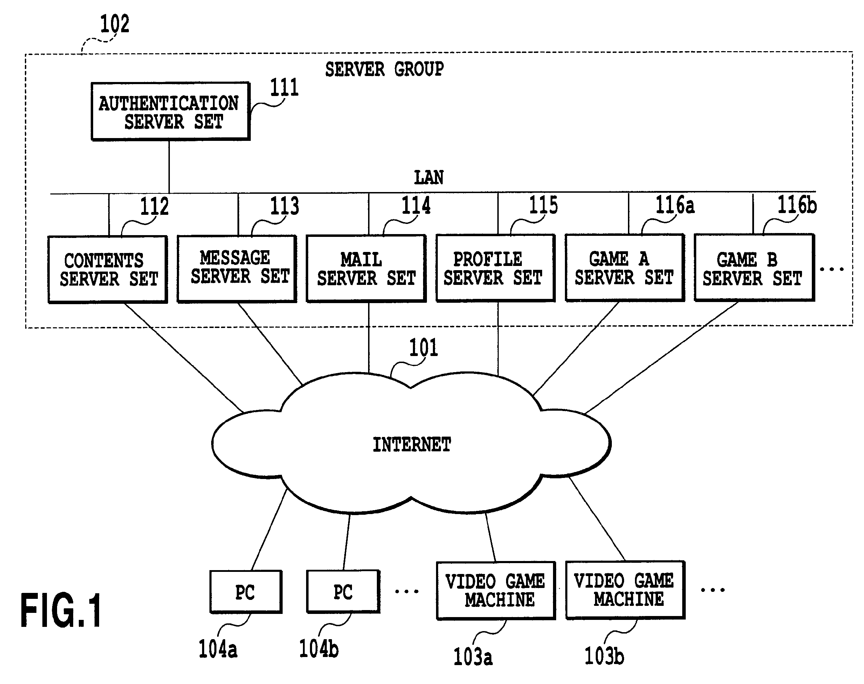

Fig. 1 shows a system configuration of an entire network service system of the present embodiment. In Fig. 1, the network service system comprises a communications network 101, a server group 102 of a carrier, and client systems 103a, 103b, 104a and 104b, for example, connectable to the server group 102 via the communications network 101 to be used by a plurality of users. The server group 102, and the client systems 103a, 103b, 104a and 104b each consist of a computer system.

The server group 102 has its internal servers cooperate to provide various information services. An information service system consisting of a set of the servers in the server group 102 is installed in various countries all over the world, configuring the server group 102. The information service system comprises authentication servers 111, contents servers 112, message servers 113, mail servers 114, game A servers 116a, game B servers 116b and profile servers 115. The authentication servers 111 manage accounts of member users (user IDs (identifiers)) and passwords. The authentication servers 111 can also manage the connection states (online/offline) of the users and the addresses of the client machines of the users in the online state. The contents servers 112 provide various pieces of information about sports, music, comics, shopping and the like.

The message servers 113 provide an environment for real-time message exchanges between users. Specifically, they provide an environment for the users to activate a messenger application and chatting application on the client machine. The message servers 113 also perform routing (establish destinations and routes) for delivering messages exchanged by the messenger application and chatting messages of the chatting application.

The mail servers 114 provide an E-mail exchange service between users.

The game A servers 116a and game B servers 116b provide online games. The user activates an online game in the game server from a viewer to play the game. For example, if the online game is a role-playing game (game in which the user participates as a character of the game), he or she can play the role-playing game with other member users.

The profile servers 115 manage for each user's account the profile of the user associated with the account. The user can record his or her own profile in the profile server 115 from the viewer.

The client systems 103a and 103b are home video game machines such as a PlayStation II (trade mark) of Sony Corp.

The client systems 104a and 104b are general purpose personal computers (called PC from now on). The client systems can load programs that relate to the present invention and will be described later from a recording medium such as a CDROM, and execute them. The client systems 103a, 103b, 104a or 104b may be simply referred to as a client below.

The communications network 101 interconnects the server group 102 and the client systems 103a, 103b, 104a and 104b and the like. The present embodiment supposes the Internet as the communications network 101 that can use such common protocols as TCP/IP (transmission control protocol/Internet protocol), HTTP (hypertext transfer protocol), SMTP(simple mail transfer protocol) and FTP(file transfer protocol) for the data transfer.

In the present embodiment, the description is made when the client system is the home video game machine 103a. The client system 103a comprises at least a main unit of the game machine, a television set, a CDROM driver and a controller.

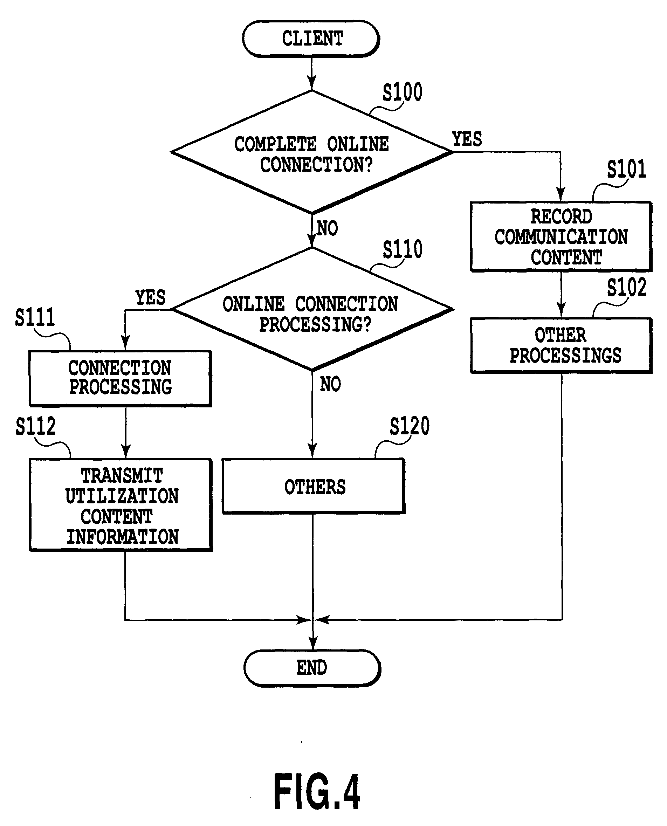

The main unit of the game machine activates the viewer, and accesses the server group 102. A television set outputs video and sound data supplied from the main unit of the game machine. The controller supplies the main unit of the game machine with a command from the user. The viewer is installed from a CDROM to the main unit of the game machine. In the present embodiment, the viewer incorporates the program of Fig. 4 so that the CPU in the main unit of the game machine executes the program, thereby carrying out the information processing of the present invention.

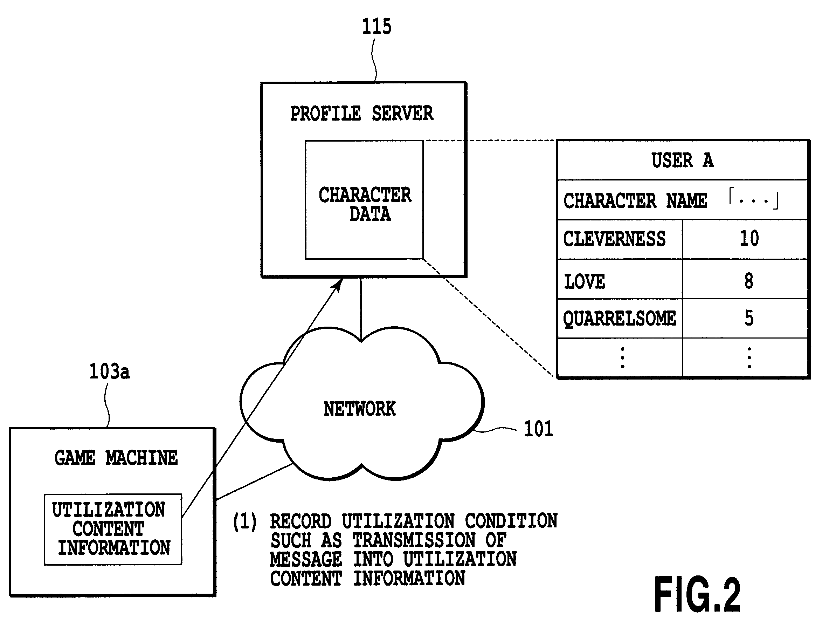

More specifically, when the user plays the online game using the game machine 103a, attribute information (parameters) of the characters (men and animals) acting out in the online game is updated according to the contents of the information services received from the server group 102. This process will now be described with reference to Fig. 2.

The profile server 115 stores, for each user account, specific parameters related to the characters of the online game, a nourishing game, in this example. The specific parameters includes parameters representing degrees of "cleverness", "love" and "foxiness" in this example.

The values of the three parameters are updated in accordance with their utilization conditions such as the utilization frequency, when the user enjoys the information services via the server group 102. More specifically, when the user transmits a message to another user utilizing the message service through the game machine 103a, the value of the "cleverness" is incremented. On the other hand, when the user records another user's name in a friend list in the profile server 115 through the game machine 103a, the value of the "love" parameter increases. The friend list is a list that records one or more users to whom a message is to be sent, and their communications addresses (accounts), which are created in the profile server 115. The message server 113 transfers a message sent from the user's client to another user's client recorded in the friend list. Receiving only the party user name from the user, the profile server 115 records the message destination, the communications address, in this case, in the friend list according to internal member information of the profile server 115.

When a (first) user records another (second) user's name in a black list, the value of the "foxiness" parameter is incremented. Here, the black list is a list that records the name and communications address of the second user whose message the first user refuses to receive. The black list is stored in the profile server 115. The message server 113 does not transfer a message from the second user entered in the black list to the first user that registers the name in the black list.

The registration in the black list is carried out through the client, and the communications address to be recorded in the black list is captured from the member information by the profile server 115.

An example will be explained of a game (nourishing game) having the parameters of its characters related to the information service utilized by the user.

The user accesses the server 116a of the game A to activate the online game. To nourish the user's own character, the first user selects a second user recorded in the friend list, and the characters of the two users have a battle. The two users carry out operations similar to those of a conventional game with their game machines (or PCs). The game A server 116a decides the outcome of the battle from the various parameters of the characters, and transmits a message about the result of the battle to the clients (game machines or PCs) of the two opponents via the message server 113. Receiving the message, the user transmits a message to the opponent via the message server 113. The message transmission increments the "cleverness" parameter stored in the profile server 114 by a predetermined value.

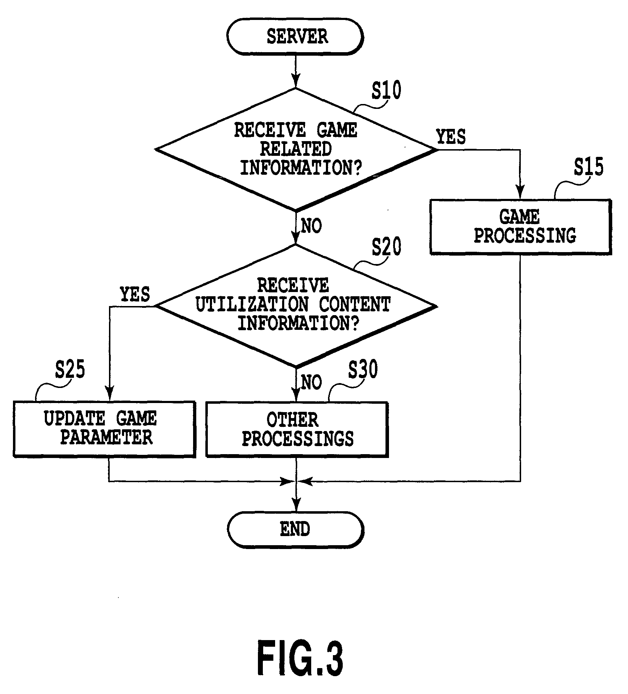

Figs. 3 and 4 illustrate the processing of the CPUs of the game server and clients (game machines or PCs) that execute the information processing associated with the game. The processing will now be described with reference to Figs. 3 and 4.

When the client accesses the server group 102, the connection processing is carried out in the same way as the connection processing of conventional system. More specifically, the authentication server group 111 of the server group 102 receives the ID and password of the user, and authenticates the user. If authorized, the user is allowed to access another server. The user selects an online game with the viewer installed in the client so that the viewer accesses the server having the online game program, the game A server 116a in this case, and activates the online game (step S100 → S110 → S111 of Fig. 4). Subsequently, the client transmits utilization content information stored in the internal hard disk to the server 116a (step S112).

The utilization content information is information indicating the utilization condition of the information service. Specifically, the utilization content information is information on the contents of the information service used in the previous online game and the number of times of using it.

The server 116a carries out the procedure as illustrated in Fig. 3 at fixed intervals, thereby performing the information processing for the online game. Receiving the instruction on the type of the game to be executed from the client (step 30 of Fig. 3), the game program is started as in the conventional game system, so that the initial set up for the game is made between the client and the server 116a.

Subsequently, receiving the utilization content information from the client, the server 116a acknowledges the reception of the utilization content information ("Yes" at step S20 of Fig. 3), and updates the parameters stored in the profile server 115 in response to the utilization condition of the information service indicated by the utilization content information (step S25 of Fig. 3).

The types of the information service include a message transmission service, registration service into the friend list and registration service into the black list. Receiving the user operation for the game via the client, the server 116a changes the display of the game on the client side (step S15 of Fig. 3).

On the client side, when the operation of the game takes place after being connected to the server 116a, the client transmits the operation information to the server 116a (step S100 → S101 in Fig. 4). In the course of this, the client writes the name of the information service used (online game in the present example) into the utilization content information memory area on the hard disk in the client as the communications record. Thus, when the message transmission service of the message server group 102 transmits the message after the battle, the utilization content information memory area stores the information indicative of the use of the message transmission service and its used frequency. The client stores the information service used by the user, and counts the used frequency (step S101).

The client executes the game by carrying out display for the game and communications with the server 116a as the conventional machine does (step S102).

As described above, the present embodiment can provide new online games such as games with a message communications function with another game player, by updating the game related parameters in response to the utilization condition by the user of multiple information services the server group (the information service system of the present invention) 102 provides.

The following variations can be implemented in addition to the foregoing embodiment.
1) In the foregoing embodiment, every time the client utilizes the online game the information service system provides, the information service system (information providing server) updates the game related parameters in response to the utilization condition of the information services. However, when the client has the game program, it can update the game related parameters by itself. On the other hand, although the client monitors the utilization condition of the information services in the foregoing embodiment, the information service system can monitor the utilization condition. To achieve such functions, the client or information service system can include the functions corresponding to those described above in the foregoing embodiment, as needed.
2) The transmission timing of the utilization condition of the information service from the client to the server is not limited to the time of access to the server. It can be transmitted in real time, or in response to the instruction of the user of the client.
3) The types of the game parameters associated with the information services can be suitably determined in accordance with the contents of the game. As for the information services, such services are available as online shopping, E-mail services, and chatting in addition to other well-known information services can be utilized.
4) The information terminal according to the present invention covers not only a PC or a dedicated game machine, but also any information processing apparatus with a communications function capable of playing games and information input for the games.

The present invention has been described in detail with respect to preferred embodiments, and it will now be apparent from the foregoing to those skilled in the art that changes and modifications may be made without departing from the invention in its broader aspect, and it is the intention, therefore, in the appealed claims to cover all such changes and modifications as fall within the true spirit of the invention.

## Claims

1. An information terminal that enables a game, and is connected to an information providing server providing information services, to receive the information services including an online game, said information terminal **characterized by** comprising:
a monitor that monitors utilization conditions of the information services; and
a transmitter that transmits results of the monitoring to said information providing server,
wherein said information providing server updates parameters used by the online game in response to the results of the monitoring.

2. The information terminal as claimed in claim 1, **characterized in that** said monitor monitors an information service other than the online game.

3. The information terminal as claimed in claim 1, **characterized in that** said monitor monitors the utilization condition of mail among the information services.

4. The information terminal as claimed in claim 1, **characterized in that** said parameters include parameters of a game character operated by a user through said information terminal.

5. An information terminal that enables a game, and is connected to an information providing server providing information services, to receive the information services including an online game, said information providing server **characterized by** comprising:
a monitor that monitors utilization conditions of the information services; and
a system that updates parameters used by the online game in response to the results of the monitoring.

6. An information terminal that enables a game, and is connected to an information providing server providing information services, to receive the information services, said information terminal **characterized by** comprising:
a monitor that monitors utilization conditions of the information services; and
a system that updates parameters used by an online game in response to the results of the monitoring.

7. An information providing server that provides an information terminal with information services including an online game, said information providing server **characterized by** comprising:
a receiver that receives utilization conditions of information services other than the online game, which are utilized by the information terminal; and
a system that updates parameters used by the online game in response to the utilization conditions,
wherein said information providing server provides the online game with the parameters.

8. An information providing server that provides a client with information services including an online game, said information providing server **characterized by** comprising:
a monitor that monitors utilization conditions of information services other than an online game from an information terminal side; and
a system that updates parameters used by the online game in response to the utilization conditions of the information services,
wherein said information providing server provides the online game with the parameters.

9. An online game method that connects an information terminal capable of playing a game to an information providing server providing information services including an online game, so that said information terminal can receive the information services, said online game **characterized by** comprising:
monitoring utilization conditions of the information services by using said information terminal or said information providing server; and
updating parameters used by the online game in response to results of the monitoring by using said information providing server.

10. A recording medium recording a program to be executed by an information terminal that enables a game, and is connected to an information providing server providing information services, to receive the information services including an online game, said program **characterized by** comprising:
monitoring utilization conditions of the information services; and
transmitting results of the monitoring to said information providing server,
wherein said information providing server updates parameters used by the online game in response to the results of the monitoring.

11. The recording medium as claimed in claim 10, **characterized in that** monitoring monitors an information service other than the online game.

12. The recording medium as claimed in claim 10, **characterized in that** monitoring monitors the utilization condition of mail among the information services.

13. The recording medium as claimed in claim 10,
**characterized in that** said parameters include parameters of a game character operated by a user through said information terminal.

14. A program to be executed by an information terminal that enables a game, and is connected to an information providing server providing information services, to receive the information services, said program **characterized by** comprising:
monitoring utilization conditions of the information services; and
transmitting results of the monitoring to said information providing server,
wherein said information providing server updates parameters used by the online game in response to the results of the monitoring.

15. An online game method **characterized by** comprising:
monitoring utilization conditions by a gamer; and
updating parameters used by the online game for that gamer in response to results for the monitoring.
